# EUROPEAN PATENT SPECIFICATION

(11) **EP 4 462 269 B1**
(45) Date of publication and mention of the grant of the patent: **29.04.2026**
(21) Application number: 24166764.1
(22) Date of filing: 27.03.2024
(51) Int. Cl.: G06F 13/16

(54) **SCHEDULING METHOD FOR INPUT/OUTPUT REQUEST AND STORAGE DEVICE**
PLANUNGSVERFAHREN FÜR EINGABE-/AUSGABEANFORDERUNG UND SPEICHERVORRICHTUNG
PROCÉDÉ DE PLANIFICATION POUR DEMANDE D'ENTRÉE/SORTIE ET DISPOSITIF DE STOCKAGE

(30) Priority: 08.05.2023 KR 20230058985
(43) Date of publication of application: 13.11.2024
(73) Proprietor: Samsung Electronics Co., Ltd., Suwon-si, Gyeonggi-do 16677 (KR)
(72) Inventor: LEE, Hanju, 16677 Suwon-si, Gyeonggi-do (KR)
(74) Representative: Kuhnen & Wacker Patent- und Rechtsanwaltsbüro PartG mbB

(56) References cited:
- US-A1- 2021 096 750
- US-A1- 2022 197 563
- US-B1- 10 587 527

## Description

### BACKGROUND

The present inventive concept relates to a storage device and a method for scheduling an input/output request for access to a memory pool.

In response to the trend of increasing capacity of a main memory required for an electronic system, the main memory may include a memory pool including a plurality of memory devices. Each of the plurality of memory devices may have different latencies required for access. For example, when the plurality of memory devices include heterogeneous memory devices, latencies may be different between the heterogeneous memory devices.

The electronic system may include an input/output device such as a storage device. The input/output device may access the memory pool to perform an operation. Different latencies for each region of the memory pool may affect a time period required for the input/output device to perform the operation. For example, a timeout may occur when the input/output device does not complete the operation within the required time period, and it may be difficult for the input/output device to guarantee a uniform quality-of-service (QoS).

US 10 587 527 B1 relates to systems and methods for apportioning bandwidth in storage systems by assigning credits to workloads that represent the volume of bandwidth that the workload may consume during a given time period and adjusting the number of credits deducted from the workload for each input/output (I/O) request based on the actual bandwidth consumed by the I/O request rather than calculating credit deductions based on an estimated bandwidth consumed by the request.

US 2021/096750 A1 relates to methods and systems for scheduling memory requests for issue to two different memory types.

US 2022/197563 A1 relates to a quality of service (QoS) traffic class latency model for just-in-time (JIT) schedulers

### SUMMARY

An aspect of the present inventive concept is to provide a method and a storage device, capable of scheduling an input/output request for a main memory, based on a latency of each region of the main memory.

A method according to the inventive concept is defined in independent claim 1. Further developments of the method according to the inventive concept are defined in dependent claims 2 to 12. A storage device according to the inventive concept is defined in independent claim 13. Further developments of the storage device according to the inventive concept are defined in dependent claims 14 and 15.

### BRIEF DESCRIPTION OF DRAWINGS

The above and other aspects, features, and advantages of the present inventive concept will be more clearly understood from the following detailed description, taken in conjunction with the accompanying drawings, in which:
FIG. 1 is a view illustrating an electronic system according to an embodiment.
FIG. 2 is a view illustrating a transaction of an electronic system according to an embodiment.
FIG. 3 is a flowchart illustrating a method for scheduling an input/output request according to an embodiment.
FIG. 4 is a view illustrating a latency table according to an embodiment.
FIG. 5 is a flowchart illustrating in detail a method for scheduling an input/output request according to an embodiment.
FIGS. 6 to 8 are views illustrating a method for scheduling an input/output request according to an embodiment.
FIGS. 9 and 10 are views illustrating an electronic system according to an embodiment.
FIG. 11 is a view illustrating a latency table according to an embodiment.
FIG. 12 is a flowchart illustrating in detail a method for scheduling an input/output request according to an example not covered by the claims.
FIG. 13 is a view for explaining a method for scheduling an input/output request according to an example not covered by the claims.
FIG. 14 is a view illustrating an electronic system according to an embodiment.

### DETAILED DESCRIPTION

Hereinafter, preferred embodiments will be described with reference to the accompanying drawings.

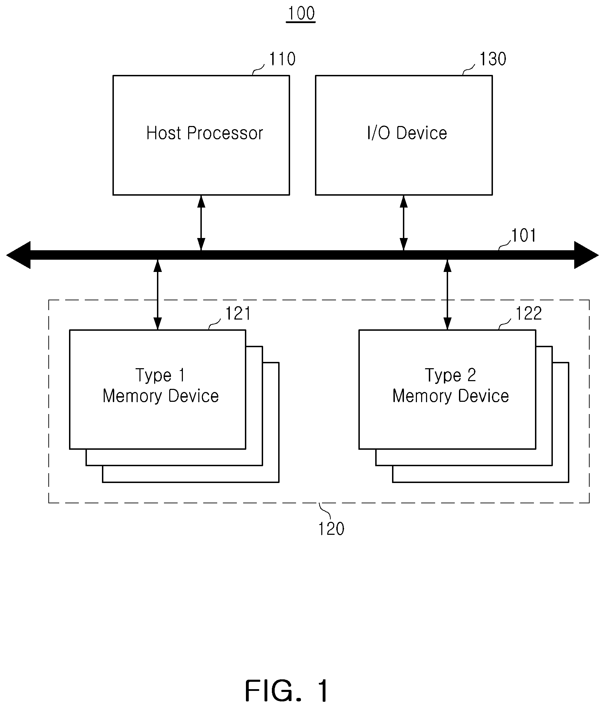

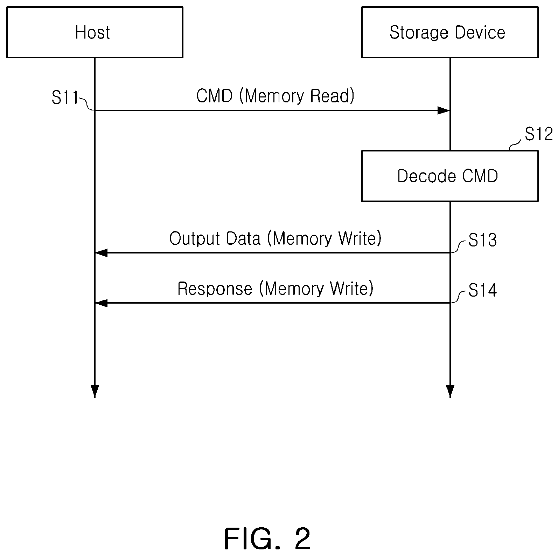

FIG. 1 is a view illustrating an electronic system according to an embodiment. FIG. 2 is a view illustrating a transaction of an electronic system according to an embodiment.

An electronic system 100 may include electronic devices such as a desktop computer, a laptop computer, a network server, and a mobile device. The electronic system 100 may run at least one operating system. The operating system may control functions and operations of the electronic system 100.

Referring to FIG. 1, the electronic system 100 includes a host processor 110, a main memory 120, an input/output device 130, and a bus 101. The bus 101 may support communications among the host processor 110, the main memory 120, and the input/output device 130.

The host processor 110 may control an overall operation of the electronic system 100 by executing an operating system. The host processor 110 may include a central processing unit (CPU). The CPU may include a processor, a memory, and an input/output interface, and may communicate with other components of the electronic system 100 via the bus 101. According to an embodiment, the host processor 110 may be implemented as a system-on-chip (SoC).

The main memory 120 may store data necessary for the operation of the electronic system 100. For example, the operating system may be loaded into the main memory 120. The main memory 120 may be accessed by the host processor 110 or the input/output device 130 through the bus 101.

According to an embodiment, the main memory 120 may be implemented as volatile memories such as a dynamic random access memory (DRAM) and a static random access memory (SRAM). The present inventive concept is not limited thereto, and the main memory 120 may include a non-volatile memory.

The input/output device 130 may expand a function of the electronic system 100. For example, the input/output device 130 may include at least one of devices such as a storage device, a graphics card, and a network card, which may be installed in a hardware slot such as a peripheral component interconnect express (PCIe) slot.

The input/output device 130 may access the main memory 120 to perform an operation allocated thereto. Referring to FIG. 2, a case in which the input/output device 130 is a storage device for example and the input/output device 130 accesses the main memory 120, will be described in detail.

FIG. 2 illustrates a transaction between a host and a storage device.

The host includes a host processor 110 and a main memory 120, as described with reference to FIG. 1, and the storage device may correspond to an input/output device 130, as described with reference to FIG. 1.

In operation S11, a storage device may acquire a command from a host. For example, a command to be provided by the host to the storage device may be generated by a host processor 110, and the command may be queued in a main memory 120. To acquire the queued command in the main memory 120, the storage device may generate a read request for the main memory 120, and may process the read request.

In operation S12, the storage device may execute the command acquired from the host.

For example, it may be interpreted whether the command is a read command, a write command, or another command, by decoding the command by the storage device. The storage device may perform an operation indicated by the command, based on a command decoding result.

When the command is a read command in which the host requests data stored in the storage device, the storage device may buffer data requested from a non-volatile memory device therein in a buffer memory therein.

In operation S13, the storage device may output the requested data to the host. An operation of outputting the data by the storage device may include an operation of the storage device writing the buffered data therein in a predetermined region of the main memory 120. For example, to output the data, the storage device may generate a write request to the main memory 120, and may process the write request.

When the command is a write command, the storage device may acquire data from a predetermined region of the main memory 120, and may write the data to a non-volatile memory device therein, in a manner different from the operation S13. In this case, to acquire the data, the storage device may generate a read request for the main memory 120, and may process the read request.

In operation S14, the storage device may provide a response to a command operation from the host to the host. For example, the response may indicate completion, failure, or the like of the command operation. The storage device may write data to a predetermined region, such as a completion queue of the main memory 120, to provide a response. The storage device may generate a write request to the main memory 120, and may process the write request to provide a response.

In short, to process a command from the host, an input/output device 130 such as a storage device may generate an input/output request to the main memory 120, and may access the main memory 120.

In response to demand for the electronic system 100 having a main memory having high capacity, the main memory 120 may include a memory pool including a plurality of memory devices. For example, when the electronic system 100 runs a plurality of virtual machines, the main memory 120 may require a large amount of memory space allocated to each of the plurality of virtual machines. To secure a high-capacity memory space, the main memory 120 may include a plurality of memory devices.

According to an embodiment, the main memory 120 may include heterogeneous memory devices. Referring to FIG. 1, the main memory 120 may include first type memory devices 121 and second type memory devices 122.

For example, the first type memory devices 121 may include a dual in-line memory module (DIMM), and the second type memory devices 122 may include compute express link (CXL) memory modules.

The DIMM may be inserted into a memory slot of the electronic system 100, and may communicate with the host processor 110 through a memory controller. The DIMM may have various types such as a double data rate (DDR), DDR2, DDR3, and DDR4, and may provide various speeds depending on a type. The CXL memory module may communicate with the host processor 110 through a PCIe-based CXL interface, and may provide high-bandwidth memory access. In some embodiments, the memory controller may be integrated into the host processor 110.

Regions of the main memory 120 have different latencies. For example, the heterogeneous memory devices such as the first type memory devices 121 and the second type memory devices 122 may have different latencies. Even memory devices of the same type may have different latencies depending on a physical location in which the memory devices are installed, or the like. Even in one memory device, the latency may be changed for each region or may be changed according to a pattern to which region is accessed.

Different latencies of each region of the main memory 120 may make it difficult to guarantee performance of the input/output device 130. Since the input/output device 130 needs to process an input/output request to the main memory 120 in order to process a command from the host, a processing time of the command may be changed depending on a region of which the main memory 120 is accessed.

In addition, when the input/output device 130 performs an input/output request for regions of a relatively high latency of the main memory 120, starvation of a resource therein may occur. Specifically, the input/output device 130 may allocate resources therein such as a buffer memory to perform an input/output operation with the main memory 120. When the input/output device 130 performs an input/output request for regions of a relatively high latency of the main memory 120, the resources therein may be occupied for a long time to perform the input/output request, and starvation of a resource may occur. For example, since the resources such as the buffer memory is assigned to an input/output request for a long time, the buffer memory cannot be assigned for another input/output request as necessary. The efficiency of using the resources may be degraded.

As a result, different latencies of each region of the main memory 120 may make it difficult to uniformly maintain a quality-of-service (QoS) provided by the input/output device 130 to the host, and such difficulties may cause a certain input/output request not to be processed within a specified time (i.e., may cause a timeout of a certain input/output request without completion).

According to an embodiment, the input/output device 130 schedules an input/output request, based on a latency of each region of the main memory 120, to prevent starvation of a resource therein and provide a predetermined QoS.

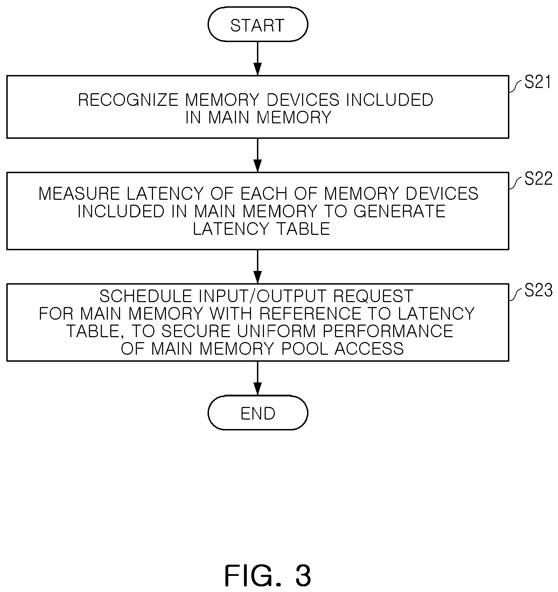

FIG. 3 is a flowchart illustrating a method for scheduling an input/output request according to an embodiment.

According to the inventive concept as claimed in the independent claims, in operation S21, information of a plurality of memory devices 121, 122 included in the main memory 120, 220 is acquired. For, example, in operation S21, an input/output device may recognize memory devices included in a main memory.

For example, memory devices included in a main memory may be recognized and controlled by a memory controller, a CXL interface, or the like of an electronic system according to a type. The memory controller may be integrated into a host processor 110 as described with reference to FIG. 1. The present disclosure is not limited thereto. For example, the memory controller may be implemented separately from the host processor 110, and may communicate with the main memory 120 via the bus 101.

Upon initialization of the input/output device, the input/output device may acquire information about the memory devices from the host processor 110, or may recognize the memory devices by directly sending and receiving a packet with the memory device. For example, the input/output device may acquire information such as types of the memory devices, and allocate identifiers to the memory devices. For example, the input/output device may receive packets including types of the memory devices, and allocate identifiers to the memory devices so that the memory devices providing the packets may be distinguished from each other. The type of a memory device may be one of a various memory type such as a DIMM and a CXL memory module.

In an embodiment as claimed by independent claim 1, in operation S22, a plurality of latencies of the plurality of memory devices 121, 122 is measured, respectively, per unit data size of a type of each memory device of the plurality of memory devices. For example, in operation S22, the input/output device measures a latency of each of the memory devices included in the main memory, and may generate a latency table.

For example, the input/output device may provide an input/output request to each of the memory devices of the main memory, and may measure a turnaround time as a latency, until the input/output request is completed. In an embodiment, to measure the turnaround time, the input/output request may be performed on a unit of data size of a type of a memory device on which the input/output request is performed. In an embodiment, the turnaround time may be measured in a booting process of the electronic system 100.

A latency of a memory device may be changed according to a type of the memory device, and may also be changed according to various access conditions of the memory device. As a first example, when the memory device is a DIMM, a latency may be changed depending on an address association between a previous request and a next request or whether a row hit is requested for data cached in a row buffer. The address association may refer to a physical adjacency of addresses indicated by the previous request and the next request, such as whether the addresses indicate a same memory row, or the addresses are included in a same memory bank. The higher the address association, the lower the latency. As a second example, when the memory device is a CXL memory module, a latency may be changed according to a margin of a buffer space in the CXL memory module, which may be represented by a PCIe credit. For example, the latency may change according to an available space of the buffer. To manage this communication efficiently, PCIe uses a credit-based flow control mechanism. The PCIe credit may refer to the available credits that a device has for transmitting data. The credit system may help to prevent data overload and ensures that the communication between devices is balanced and efficient.

The input/output device may collect a plurality of latency values, and may generate a latency table, based on latency values measured for each memory device. For example, a latency table may store latency values for each memory device. Since the latency values may be changed according to various access conditions even in one memory device, the input/output device may store a representative value determined for each memory device, based on a plurality of latency values measured for each memory device in the latency table. For example, the represent value may be an average value of the plurality of latency values.

The present inventive concept is not limited to a case in which the latency table stores latency values for each memory device. For example, the input/output device groups a plurality of memory devices into memory groups, and generate a latency table storing a latency value for each of the memory groups. In an embodiment as claimed by independent claim 1, a plurality of memory devices are grouped into a plurality of memory groups, for example memory groups of the same type or into memory groups having similar latency values.

In operation S23, the input/output device schedules an input/output request for the main memory with reference to the latency table, to maintain uniform performance of the input/output request and, as a result, provide a predetermined QoS with each input/output request from the input/output device 130.

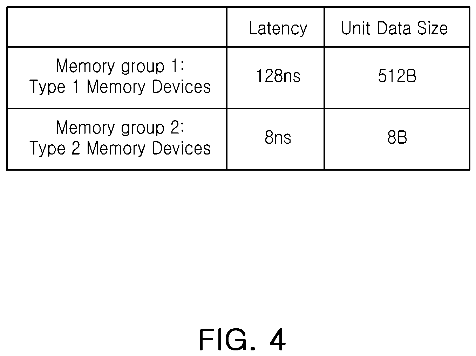

Hereinafter, a method for scheduling an input/output request according to an embodiment will be described in detail with reference to FIGS. 4 to 7. The scheduling refers to an allocation of credits to each memory group according to a latency thereof. If credits of one memory group is exhausted input/output requests for the one memory group may be delayed, and input/output requests for other memory group whose credits are not exhausted may be processed in advance, so the input/output requests are scheduled.

FIG. 4 is a view illustrating a latency table according to an embodiment.

Referring to FIG. 4, a latency table may include a latency value per memory group and a unit data size per memory group. Hereinafter, the term "per a memory group" may refer to "of each memory group of a plurality of memory groups." For example, a latency value per memory group may refer to a latency value of each memory group. For example, a unit data size of a memory group may refer to a unit data size of each memory group.

When a main memory includes heterogeneous memory devices, communication protocols applied to the heterogeneous memory devices may be different. Due to different protocols, a unit data size that may be transmitted by an input/output request may be different for each memory device.

For example, a first memory group may include first type memory devices, and a second memory group may include second type memory devices. The first type memory devices may be DIMMs, and the second type memory devices may be CXL memory modules.

According to embodiments, a DIMM may perform an input/output operation in a burst mode. Specifically, to quickly access memory cells included in one row, an input/output operation may be performed on all memory cells indicated by one row address. Therefore, the unit data size of the input/output operation may be determined according to a size of a row of the DIMM, and the DIMM may perform the input/output operation of a fixed unit data size.

Depending on an embodiment, a data size for an input/output operation may be specified in an input/output request for a CXL memory module. For example, a minimum size of a data size of one input/output request may be 8B (byte), and relatively large size data such as 1024B and 2048B may be requested by one input/output request. For example, the CXL memory module may process an input/output request having various data sizes as well as a unit data size of 8B. A latency of an input/output request to the CXL memory module may be changed depending on the data size of the input/out request.

A latency value stored in the latency table refers to a latency per unit data size. In an example of FIG. 4, a unit data size of the first type memory devices may be 512B, and a latency value for the unit data size 512B may be 128ns. A unit data size of the second type memory devices may be 8B, and a latency value for the unit data size 8B may be 8ns.

For the CXL memory module, a latency of an input/output request may not be necessarily directly proportional to a data size of the input/output request. This may be because a latency for an input/output request includes not only a time period taken to transmit a data packet, but also a time period taken to transmit a packet including the input/output request. For example, when 2048ns is required for input/output of 2048B data in the CXL memory module, to input/output 8B data, it may take longer than 8ns.

When relatively large size data such as 2048B is mainly input/output in the CXL memory module supporting high bandwidth, a latency for an input/output request may be assumed to be proportional to a data size of the input/output request.

The input/output device schedules an input/output request by referring to the latency table, allocating a credit per memory group, and deducting the number of credits determined according to a data size of the input/output request to fulfill the input/output request.

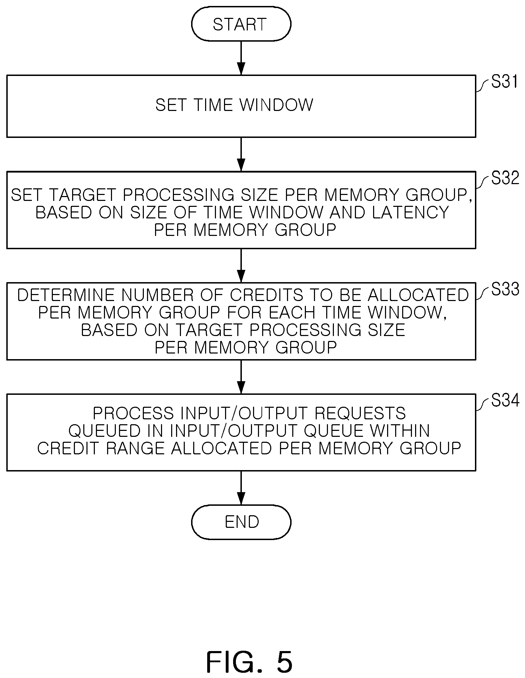

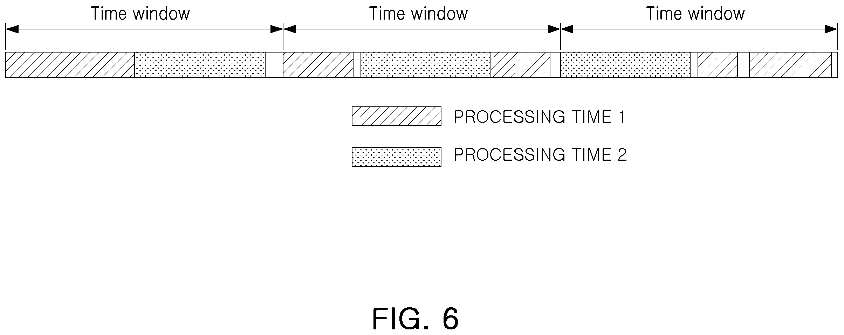

FIGS. 5 and 6 are views illustrating a method for scheduling an input/output request according to an embodiment.

Referring to FIG. 5, in operation S31, an input/output device sets a size of a time window. The time window refers to a cycle in which a credit per memory group is allocated in credit-based input/output request scheduling according to an embodiment.

In operation S32, the input/output device sets a target processing size per memory group, based on the size of the time window and latency per memory group.

Referring to FIG. 6, a first processing time period for processing an input/output request of a first memory group and a second processing time period for processing an input/output request of a second memory group may be illustrated in a plurality of time windows, respectively. The time window refers to a period during which a predetermined amount of data may be processed in the first memory group and the second memory group, respectively. The plurality of time windows may be consecutive in time reference.

The target processing size per memory group is determined in operation S32. The target processing size may refer to a data size that may be processed in the time window. In an example of FIG. 6, target processing sizes of the first and second memory groups may be determined such that a sum of a first processing time period for processing data of a target processing size in the first memory group and a second processing time period for processing data of a target processing size in the second memory group is not larger than the size of the time window.

A processing time period per memory group may be determined, based on a target processing size per memory group and a latency per unit data size per memory group. For example, the processing time for a memory group may be established by considering the target processing size and latency per unit data size within that memory group. When it is assumed that a latency of an input/output request is proportional to a data size of the input/output request, a target processing size per memory group may be determined such that a sum of values obtained by multiplying the latency per unit data size of each of the memory groups to the target processing size thereof is not greater than the time window.

To determine the target processing size per memory group, a ratio of the target processing size per memory group may be determined. As a first example, the ratio of the target processing size may be determined to be equal to a performance ratio per memory group, which may be determined based on the latency per memory group. In an example of FIG. 4, latencies required for the first memory group and the second memory group to process the same 512B data are 128 ns and 512 ns, respectively, and performance of the first memory group may be judged to be 4 times higher than that of the second memory group. In this case, a ratio of target processing sizes of the first memory group and the second memory group may be determined to be 4:1.

A method of determining the ratio of the target processing size is not limited to the first example as described above. As a second example not covered by the claims, target processing sizes per memory group may be set to have the same value to each other. For example, a ratio of target processing sizes of the first memory group and the second memory group may be determined to be 1:1.

Referring back to FIG. 5, in operation S33, the input/output device determines the number of credits to be allocated per memory group for each time window, based on the target processing size per memory group.

For example, the number of credits to be allocated per memory group may be determined by dividing the target processing size per memory group by the unit data size. When the target processing sizes of the first memory group and the second memory group are 8192B and 2048B, respectively, in an example of FIG. 4, the number of credits of the first memory group may be determined to be 8192B/512B = 16, and the number of credits of the second memory group may be determined as 2048B/8B = 256.

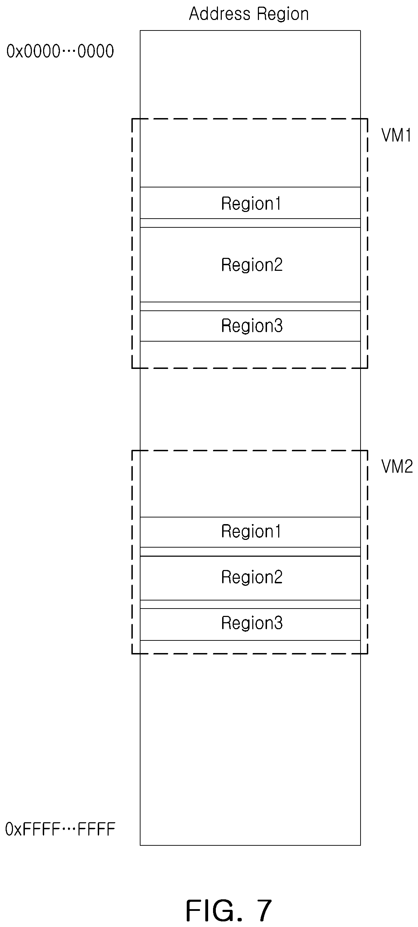

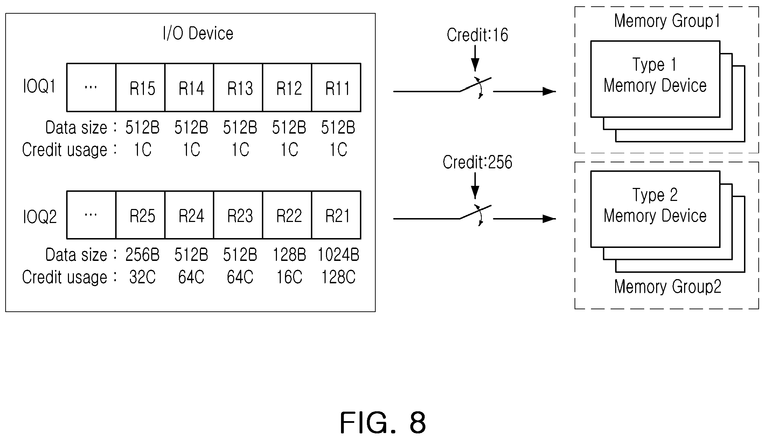

In operation S34, the input/output device processes an input/output request queued in an input/output queue within a credit range allocated per memory group. The input/output device processes an input/output request queued in an input/output queue using credits allocated per memory group, and once the allocated credits are exhausted, an input/output request thereafter may be deferred to the next time window when new credits are filled up. A method of scheduling an input/output request within an allocated credit range will be described in more detail with reference to FIGS. 7 and 8.

FIGS. 7 and 8 are views illustrating a method for scheduling an input/output request according to an embodiment.

An input/output device may access a main memory to perform an operation for a host, and may generate an input/output request to access the main memory.

FIG. 7 illustrates an address region of a main memory that may be accessed by an input/output device. For example, a physical address corresponding to each region of the main memory may be mapped to a virtual address of the host, and the input/output device may access to each region of the main memory, based on the virtual address. FIG. 7 may illustrate a virtual address region of the main memory which is mapped to the corresponding physical address of the main memory.

A memory address to be accessed by the input/output request may be determined according to an operation performed by the input/output device, and a memory device may be determined according to the address. For example, when the host executes a plurality of virtual machines VM1 and VM2, a main memory region may be allocated to each of the virtual machines. The input/output device may access different regions of the main memory, when performing an operation requested by a first virtual machine VM1 and when performing an operation requested by a second virtual machine VM2.

In addition, the input/output device may access different regions of the main memory according to the operations performed by the input/output device. For example, when the input/output device performs a read command, as described with reference to FIG. 2, the read command may be acquired from a first region Region1 of the main memory, data may be written to a second region Region2 of the main memory, and a response may be written in a third region Region3 of the main memory.

Other regions of the main memory accessed by the input/output request may be specified by a memory address, e.g., a virtual address. The virtual address may be converted into a physical address, and the input/output device may specify a memory device accessed by the input/output request, based on the physical address.

In short, to perform an operation for a host, an input/output device may generate input/output requests for various memory devices constituting a main memory, and a memory device to be accessed by each of the input/output requests within the main memory may be specified.

FIG. 8 illustrates an input/output device, first type memory devices included in a first memory group, and second type memory devices included in a second memory group.

An input/output device includes at least one input/output queue. The input/output device may queue generated input/output requests to the at least one input/output queue. In FIG. 8, the input/output device includes input/output queues IOQ1 and IOQ2 for each of the first memory group and the second memory group. Further, the input/output device queues the input/output requests to one of the input/output queues IOQ1 and IOQ2, according to a memory device to be accessed by the input/output requests. The present inventive concept is not limited thereto, and the input/output queues may be provided for each memory device, or may be integrated into one input/output queue, regardless of a memory group.

In an example of FIG. 8, 16 credits may be allocated for a first input/output queue and 256 credits may be allocated for a second input/output queue in one time window. The input/output device may use the credits to execute input/output requests (R11 to R15, and R21 to R25) queued in the first and second input/output queues. For example, whenever an input/output device executes an input/output request for a memory group, credits allocated to the memory group may be deducted. When all of the credits for the memory group are consumed in a time window, the input/output device may defer processing of the input/output request for the memory group, until the credits are allocated in a next time window.

A number of credits deducted for the input/output request may be determined, based on a data size to be processed by the input/output request. For example, data sizes of first input/output requests R11 to R15 for the first memory group may be constant as 512B. The number of credits deducted after completing each of the first input/output requests R11 to R15 may be determined as '1.' Data sizes of the second input/output requests R21 to R25 for the second memory group may be changed for each of the input/output requests. The number of credits deducted after completing each of the second input/output requests R21 to R25 may be determined, based on a value of (data size)/(unit data size). Whenever an input/output device executes an input/output request for a memory group, credits may be deducted.

According to an embodiment, to process an input/output request for a main memory having memory groups having different latencies, a target processing size per memory group is set, based on a latency per memory group. Credits are allocated per memory group, based on the target processing size per memory group, and the input/output request may be scheduled, based on the credits.

According to an embodiment, since data corresponding to the target processing size per memory group is processed in a time window, throughput per memory group may be maintained uniformly. Based on the uniform throughput per memory group, the input/output device may maintain QoS of operations involving the input/output request to the main memory.

Since input/output requests are scheduled based on a credit, to process input/output requests for a memory group having a relatively long latency, a large amount of internal resources of an input/output device may be prevented from being occupied for a long time. As a result, starvation of the internal resources of the input/output device may be prevented, and delay of operations due to the starvation of the internal resources may be prevented. Therefore, timeout of the input/output device for a host command may be prevented.

In an example of FIG. 8, a read request and a write request, among input/output requests, may be scheduled without being distinguished. The present inventive concept is not limited thereto. As a first example, a credit may be distributed to a read request and a write request, among input/output requests per memory group, and input/output requests may be scheduled based on the credit. As a second example, a credit may be allocated only to a read request or a write request. When an input/output device has read and write buffers, which are distinguished, the input/output device may distribute a credit to a read request and a write request, respectively, and may process read requests and write requests, respectively, among input/output requests, within the distributed credit range. The input/output device may schedule read requests and write requests, respectively, to more effectively prevent starvation of resources of read and write buffers.

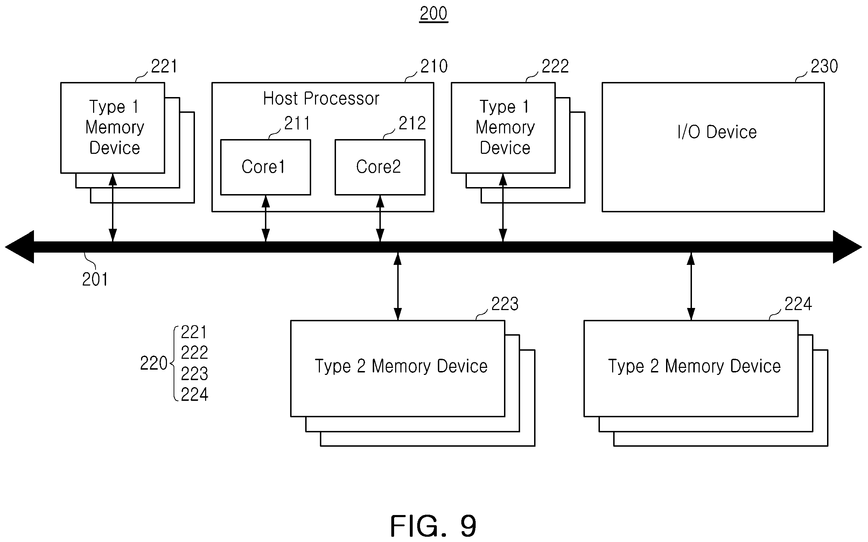

FIGS. 4 to 8 have been described as an example in which a main memory includes heterogeneous memory devices and scheduling is performed based on a latency of memory groups grouped according to types of the memory devices. The present inventive concept is not limited thereto. Hereinafter, a method for scheduling an input/output request according to an embodiment will be described with reference to FIGS. 9 to 13.

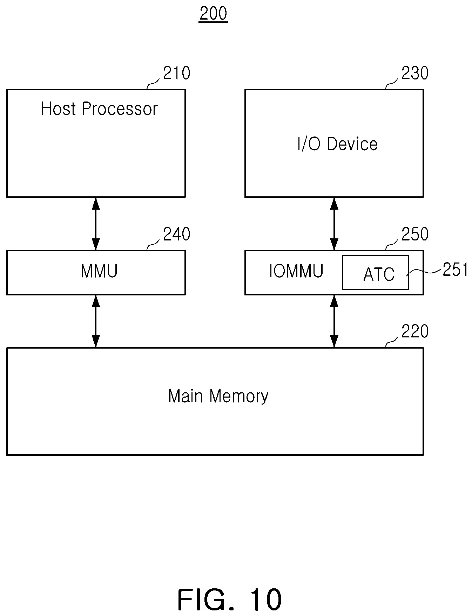

FIGS. 9 and 10 are views illustrating an electronic system according to an embodiment.

Referring to FIG. 9, an electronic system 200 includes a host processor 210, a main memory 220, an input/output device 230, and a bus 201. The host processor 210, the main memory 220, the input/output device 230, and the bus 201 may correspond to the host processor 110, the main memory 120, the input/output device 130 and the bus 101, described with reference to FIG. 1, respectively. Hereinafter, differences between the electronic system 200 of FIG. 9 and the electronic system 100 of FIG. 1 will be mainly described.

The host processor 210 may include a plurality of cores 211 and 212. Each of the plurality of cores 211 and 212 may be processing cores including an arithmetic unit and a cache memory, and may simultaneously and independently operate.

The main memory 220 may include first to fourth memory device groups 221, 222, 223, and 224. The first and second memory device groups 221 and 222 may include first type memory devices, and the third and fourth memory device groups 223 and 224 may include second type memory devices. According to an embodiment, the first type memory devices may be DIMMs, and the second type memory devices may be CXL memory modules.

Even among homogeneous memory devices, a latency for processing an input/output request in a memory device may be changed according to a location of a memory device. For example, when the electronic system 200 is a non-uniform memory access (NUMA) system, each of the plurality of cores 211 and 212 may be designed to have a local memory.

For example, the first memory device group 221 may be a local memory of a first core 211, and the second memory device group 222 may be a local memory of a second core 212. Positions of the first memory device group 221 and the second memory device group 222 may be separated. A latency for an input/output request generated by the input/output device 230 may also be different according to positions of the first memory device group 221 and the second memory device group 222.

When the third memory device group 223 and the fourth memory device group 224 also have physically separated locations, a latency for an input/output request generated by the input/output device 230 may be different.

The latency of the input/output request generated by the input/output device 230 may vary depending on other factors as well as a physical location of a memory device, and, for example, may also be changed depending on whether an address translation cache (ATC) hit for an input/output request is present. ATC will be described in more detail with reference to FIG. 10. In some embodiments, the latency of the input/output request may be measured for each memory device when the ATC hit is present for the input/output request.

FIG. 10 is a view illustrating how a host processor 210 and an input/output device 230 access a main memory 220 in the electronic system 200. The host processor 210, the main memory 220, and the input/output device 230 of FIG. 10 may correspond to those described with reference to FIG. 9, respectively.

Referring to FIG. 10, the electronic system 200 may further include a memory management unit (MMU) 240 and an input/output memory management unit (IOMMU) 250. The MMU 240 may manage access of the host processor 210 to the main memory 220. Specifically, the MMU 240 may convert a virtual address of the host processor 210 into a physical address of the main memory 220, and may perform various tasks such as memory protection, cache management, and bus arbitration.

Similar to the MMU 240, the IOMMU 250 may manage access of the input/output device 230 to the main memory 220. Specifically, the IOMMU 250 may convert a virtual address of the input/output device 230 into a physical address of the main memory 220, and may provide a function of protecting a memory from a malfunction of the input/output device 230.

The input/output device 230 may provide an input/output request including a virtual address to the IOMMU 250, to access the main memory 220. The IOMMU 250 may search for mapping information of a virtual address to a physical address, may convert the virtual address to the physical address, based on the mapping information, and may send an input/output request including the physical address to the main memory 220. Since the IOMMU 250 has to process each of the input/output requests individually, a bottleneck phenomenon may occur.

To alleviate the bottleneck phenomenon, the IOMMU 250 may provide an address translation service (ATS). When ATS is used, the IOMMU 250 may cache recently used mapping information in an address translation cache (ATC) 251. When a virtual address for an input/output request is hit in the ATC 251, the virtual address may be converted into a physical address using the recently used mapping informing, and the input/output request may be transferred to the main memory 220. A latency of the input/output request may be changed depending on whether the ATC is hit or not. For example, a latency of the input/output request may be lower in the ATC hit compared to the ATC miss.

According to an embodiment, memory devices of a main memory may be grouped according to a latency, and a latency table per memory group may be generated. According to an embodiment, a homogeneous memory device may be grouped into two or more memory groups. In addition, according to an embodiment, for credit-based scheduling, whether or not input/output requests have an ATC hit, respectively, may be further referred to.

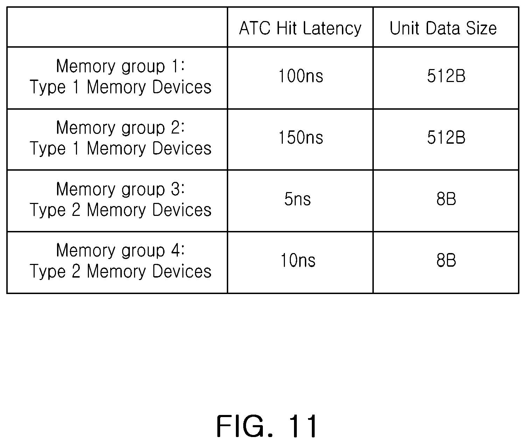

FIG. 11 is a view illustrating a latency table according to an embodiment.

Referring to FIG. 11, a latency table may include a latency in a unit data size, respectively, for first to fourth memory groups in an ATC hit. The present disclosure is not limited thereto. The latency table may include a latency of each of the first to fourth memory groups in an ATC miss. In the ATC miss, a latency for searching for mapping information may be added, and thus the latency in the ATC miss may increase, as compared to the ATC hit.

An input/output device may classify memory devices according to memory types, and memory devices classified as the same type may also be grouped into different groups according to a latency. In an example of FIG. 11, first and second memory groups of the first type memory devices may have different latencies, and third and fourth memory groups of the second type memory devices may have different latencies.

As a first example, the input/output device may group memory devices, having a latency in different ranges, into different groups, after measuring a latency of each of the memory devices. As a second example, the input/output device may group memory devices, based on physical locations of the memory devices or the like, and may measure a latency per memory device group.

According to an embodiment, a credit per memory group is allocated based on a latency per memory group, and an input/output request is scheduled based on the credit. In addition, during scheduling, whether or not an ATC hit of an input/output request may be further considered.

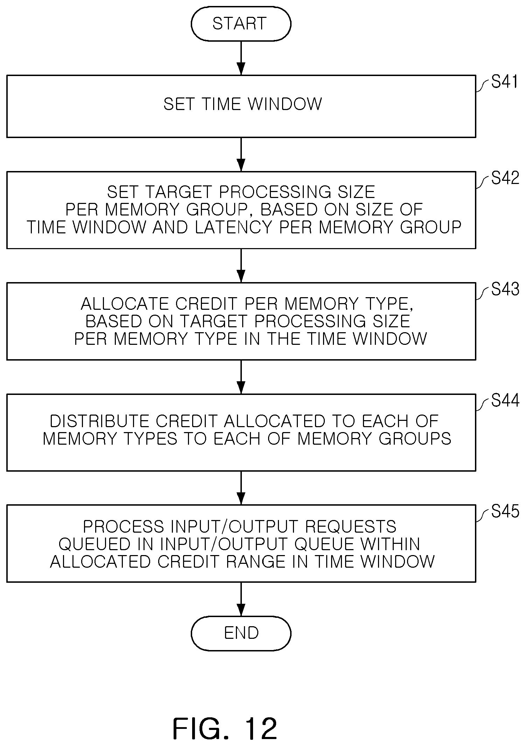

FIG. 12 is a flowchart illustrating in detail a method for scheduling an input/output request according to an example not covered by the claims.

In operation S41, an input/output device may set a time window.

In operation S42, the input/output device may determine a target processing size per memory type, based on a size of the time window and a latency per memory type.

For example, a latency per memory type may be determined, based on a latency per memory group included in a latency table. The target processing size per memory type may be set to a value capable of processing all of the target processing sizes per memory type within the time window according to the latency per memory type.

The target processing size per memory type may be set to have the same target processing size per memory type, or may be set to have a target processing size of a ratio determined based on performance per memory type.

In operation S43, the input/output device may allocate a credit per memory type, based on the target processing size per memory type in the time window.

For example, a credit may be determined as a value of (target processing size)/(unit data size) for each of the memory types.

In operation S44, the input/output device may distribute a credit allocated to each of the memory types to each of the memory groups.

As described with reference to FIG. 11, a latency of a homogeneous memory device may also be changed due to various causes. For different memory groups of the same memory type, the credit may be distributed, based on a latency. For example, more credit may be allocated to a memory group having a lower latency.

In operation S45, the input/output device may process input/output requests queued in an input/output queue within the allocated credit range in the time window.

Within a credit range allocated per memory group, an input/output request per memory group is scheduled.

According to an embodiment, an input/output device performs scheduling of an input/output request even between memory devices of the same type having different latencies, to maintain a target processing size set for each memory type.

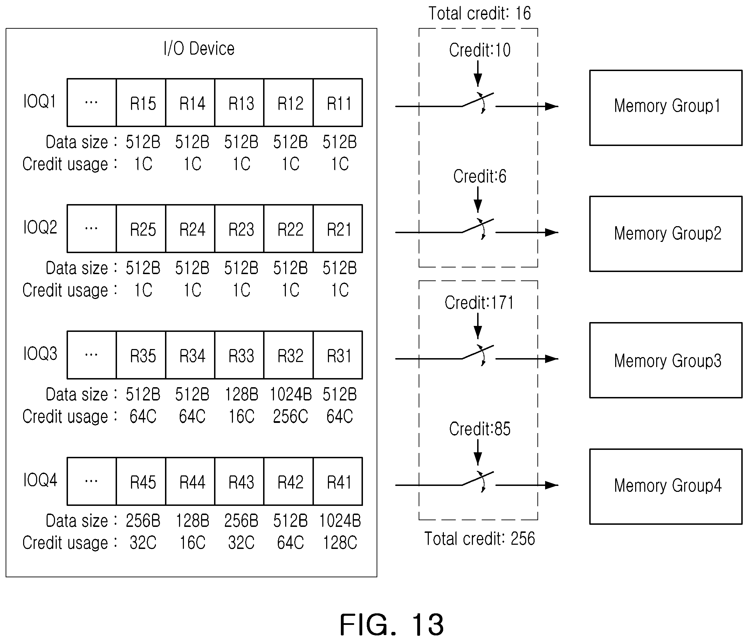

FIG. 13 is a view illustrating a method for scheduling an input/output request according to an example not covered by the claims.

FIG. 13 illustrates an input/output device and first to fourth memory groups.

As described above, the input/output device may generate input/output requests for various memory devices constituting a main memory, and a memory device to be accessed by each of the input/output request may be specified.

The input/output device may include one or more input/output queues. In an example of FIG. 13, the input/output device may include input/output queues for each of the first to fourth memory groups. The present inventive concept is not limited thereto.

In an example of FIG. 13, 16 credits may be allocated for a first type memory device and 256 credits may be allocated for a second type memory device in one time window. 16 credits allocated to the first type memory device may be distributed to first and second memory groups, and 256 credits allocated to the second type memory device may be distributed to third and fourth memory groups.

According to an example not covered by the claims, a larger number of credits may be allocated to a memory group having a lower latency, and a smaller number of credits may be allocated to a memory group having a higher latency. When a large number of requests for memory groups having a higher latency are performed, a target processing size per memory type may be provided while preventing a problem of starvation of internal resources of an input/output device.

Depending on an embodiment, a credit deduction amount for each of the input/output requests may be adjusted according to whether each of the input/output requests misses ATC. For example, in an ATC miss, an additional latency for searching for mapping information for converting a virtual address into a physical address may occur, and thus a latency may increase, as compared to a latency in an ATC hit. Therefore, a credit deduction amount for an input/output request, which may be an ATC miss, may increase.

According to an embodiment, in an electronic system having a memory pool including memory devices having various latencies, an input/output device schedules an input/output request for accessing to the memory pool, based on the latencies of the memory devices, to maintain constant input/output performance, despite a difference in latency between devices. Therefore, QoS of an operation of the input/output device accompanying the input/output request may be guaranteed, and timeout of the operation may be prevented.

Hereinafter, an electronic system according to an embodiment will be described in detail by taking a case in which the input/output device described with reference to FIGS. 1 to 11 is a storage device as an example.

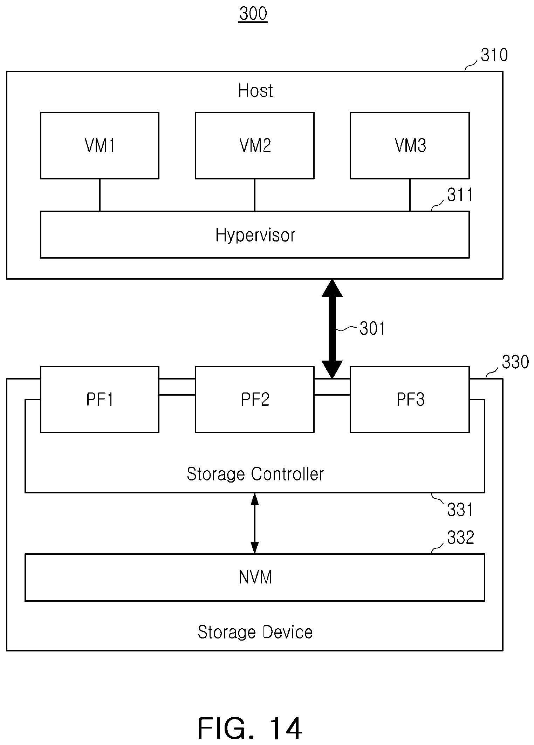

FIG. 14 is a view illustrating an electronic system according to an embodiment.

Referring to FIG. 14, an electronic system 300 may include a host 310, a storage device 330, and a bus 301. The bus 301 may support communication between the host 310 and the storage device 330.

The host 310 may be a computing device such as a desktop computer, a laptop computer, a network server, and a mobile device. The host 310 includes a host processor and a main memory as shown in FIGS. 1 and 9, for example.

The storage device 330 may store data in response to a request of the host 310. For example, the storage device 330 may include at least one of a solid state drive (SSD), an embedded memory, and a removable external memory.

The storage device 330 includes a storage controller 331 and a non-volatile memory device 332. The non-volatile memory device 332 may be a storage medium for storing data received from the host 310, and may include, for example, a flash memory. The storage controller 331 may control the non-volatile memory device 332.

When the storage device 330 is an SSD, the storage device 330 may be a device operating according to a non-volatile memory express (NVMe) standard. When the storage device 330 is a device operating according to the NVMe standard, the bus 301 may be a peripheral component interconnect express (PCIe) bus.

The host 310 may execute at least one operating system using a processor. The operating system may manage and control overall functions and operations of the host 310. For example, the host 310 may execute a hypervisor 311 under a host operating system. The hypervisor 311 may be a component of the host operating system, and may be provided by an application running under the host operating system.

The hypervisor 311 may abstract a physical resource including a processor, a memory, and an input/output device, and the abstracted physical resource may be provided to virtual machines VM1, VM2, and VM3 as a virtual device including a virtual processor, a virtual memory, and a virtual input/output device. Each of the virtual machines VM1, VM2, and VM3 may execute a guest operating system using a virtual device. Under the guest operating system, one or more applications may run. The hypervisor 311 may also be referred to as a virtual machine monitor (VMM) and may be software that creates and runs the virtual machines VM1, VM2, and VM3, for example. In an embodiment, the hypervisor 311 may enable one host computer to support multiple virtual machines VM1 to VM3 by virtually sharing its resources such as the main memory and processing. For the convenience of description, three virtual machines VM1 to VM3 are referred to, but the present disclosure is not limited thereto. The hypervisor 311 may generate more than three or less than three virtual machines.

The storage controller 331 may provide a plurality of virtual storage devices to the host 310. For example, the storage controller 331 may provide a plurality of physical functions PF1, PF2, and PF3. A physical function may refer to a full-featured PCIe function that may be discovered, managed, and manipulated like any other PCIe device. The host 310 may independently and individually access the physical functions PF1, PF2, and PF3. According to embodiments, the storage controller 331 may further support a virtual function, which may be a lightweight PCIe function that shares one or more resources with a physical function.

The storage device 330 may allocate a resource such as a storage space to each of the physical functions PF1, PF2, and PF3, and may be required to ensure consistent target QoS for the physical functions PF1, PF2, and PF3.

The QoS may refer to an ability for the storage controller 331 to prioritize data flow among different physical functions PF1, PF2, and PF3 to guarantee stable and consistent performance of data input/output operations of the different physical functions PF1, PF2, and PF3. For example, performance indicators of QoS may include input/output operations per second (IOPS), response time, throughput, or the like.

To ensure stable QoS for each of the different physical functions PF1, PF2, and PF3, even when workload is concentrated on a first physical function PF1, the storage device 330 may process the workload within a limit of target QoS of the first physical function PF1. The processing the workload concentrated on the first physical function PF1 by the storage device 330 may not affect QoS of second and third physical functions PF2 and PF3.

It becomes important for the electronic system 300 to ensure a fixed storage capacity and stable QoS for each of the physical functions PF1, PF2, and PF3. The storage device 330 may access a main memory of the host 310 to process commands for the physical functions PF1, PF2, and PF3. When memory devices included in the main memory of the host 310 have various latencies, command processing time may be changed according to a latency, and it may be difficult to guarantee QoS of each of the physical functions PF1, PF2, and PF3.

According to an embodiment, to guarantee QoS to the physical functions PF1, PF2, and PF3, the storage controller 331 may allocate a buffer memory resource of the storage device 330 based on a latency of the main memory allocated for each of the virtual machines VM1, VM2, and VM3.

Each of the physical functions PF1, PF2, and PF3 may be mapped to the one or more virtual machines VM1, VM2, and VM3. The physical functions PF1, PF2, and PF3 may access the main memory regions allocated to the virtual machines VM1, VM2, and VM3 for command processing. The storage controller 331 may recognize memory devices included in the main memory of the host 310, and may determine a latency of regions accessed by each of the plurality of physical functions according to which memory device is included.

According to an embodiment, the storage controller 331 schedules an input/output request for the regions, based on a latency of the regions. In an embodiment as claimed by independent claim 13, the storage controller 331 performs credit-based scheduling, as described with reference to FIGS. 1 to 11. By performing credit-based scheduling by the storage controller 331, data throughput for the regions may be maintained.

The storage controller 331 may allocate a buffer memory region included in the storage controller 331, based on the target QoS of each of the physical functions PF1, PF2, and PF3 and the data throughput of the region accessed by each of the physical functions PF1, PF2, and PF3. For example, the storage controller 331 may allocate a larger buffer memory region, as the target QoS of a certain physical function is higher and the data throughput of the main memory region accessed by the physical function is lower.

According to an embodiment, the storage device 330 may maintain the data throughput for each main memory region even though the latency of each main memory region of the main memory of the host 310 is changed, and QoS provided by the physical functions PF1, PF2, and PF3 may be maintained. For example, irrespective of the change in the latency of each region of the main memory of the host 310, the data throughput for each main memory region may be maintained.

According to embodiments, an input/output request to a main memory may be scheduled, based on a latency of each region of the main memory, to maintain a uniform throughput of an input/output request.

According to embodiments, a throughput of input/output requests to a main memory to process an operation accompanied by the input/output requests in a predetermined time period may be adjusted to secure QoS for the operation.

Problems to be solved by the present inventive concept are not limited to the problems mentioned above, and other problems not mentioned will be clearly understood by those skilled in the art from the above description.

While example embodiments have been illustrated and described above, it will be apparent to those skilled in the art that modifications and variations could be made within the scope of the present inventive concept as defined by the appended claims.

## Claims

1. A method of scheduling an input/output request for a main memory (120, 220), comprising:
acquiring (S21) information of a plurality of memory devices (121, 122) included in the main memory (120, 220);
measuring (S22) a plurality of latencies of the plurality of memory devices (121, 122), respectively, per unit data size of a type of each memory device of the plurality of memory devices;
grouping the plurality of memory devices (121, 122) into a plurality of memory groups (121, 122, 221, 222, 223, 224);
determining (S31) a size of a time window to be periodically repeated;
setting (S32) a target processing size of each memory group of the plurality of memory groups, based on the size of the time window and a latency of each memory group of the plurality of memory groups;
allocating (S33) a credit value of each memory group for each time window, based on the target processing size of each memory group of the plurality of memory groups; and
processing (S35) a plurality of input/output requests queued in an input/output queue associated with a corresponding memory group of the plurality of memory groups using the allocated credits of each memory group of the plurality of memory groups.

2. The method of claim 1,
wherein the setting (S32) of the target processing size of each memory group comprises setting the target processing size of each memory group such that a sum of values obtained by multiplying a latency per the unit data size of each memory group of the plurality of memory groups to the target processing size thereof is not greater than the size of the time window.

3. The method of claim 2,
wherein the setting (S32) of the target processing size of each memory group comprises setting a ratio for the target processing size of each memory group to be equal to a performance ratio of each memory group, and
wherein the performance ratio of each memory group is determined based on the latency of each memory group.

4. The method of claim 2,
wherein the setting (S32) of the target processing size of each memory group comprises setting the target processing size of each memory group to have the same value.

5. The method of any one of claims 1 to 4,
wherein the credit value of each memory group corresponds to a number acquired by dividing the target processing size of each memory group by the unit data size of each memory group.

6. The method of any one of claims 1 to 5,
wherein the processing (S35) of the plurality of input/output requests comprises processing an input/output request for a memory group, and deducting credits of the memory group, and
wherein a size of credits deducted is determined based on a data size of the input/output request.

7. The method of any one of claims 1 to 6,
wherein the processing (S35) of the plurality of input/output requests comprises, when credits allocated to a memory group are exhausted, deferring processing of an input/output request for the memory group until credits are allocated to the memory group.

8. The method of any one of claims 1 to 7, further comprising:
distributing a credit allocated per memory group to a read request and a write request,
wherein the processing (S35) of the plurality of input/output requests comprises processing read requests and write requests among the plurality of input/output requests using the distributed credit.

9. The method of any one of claims 1 to 8,
wherein the grouping of the plurality of memory devices (121, 122) into the plurality of memory groups (221, 222, 223, 224) is performed based on the type of each of the plurality of memory devices (121, 122) so that memory devices of each group of the plurality of memory groups (221, 222, 223, 224) have the same type.

10. The method of claim 9,
wherein the type of each of the plurality of memory devices (121, 122) corresponds to one of a dual in-line memory module, DIMM, and a compute express link, CXL, memory module.

11. The method of claim 9 or 10,
wherein the grouping of the plurality of memory devices (121, 122) into the plurality of memory groups (221, 222, 223, 224) is performed further based on a latency of each memory device of the plurality of memory devices (121, 122).

12. The method of any one of claims 1 to 11,
wherein the measuring of the plurality of latencies includes measuring a turnaround time until each memory device completes the input/output request.

13. A storage device comprising:
a non-volatile memory device (332); and
a storage controller (331) including a buffer memory and configured to perform the method of any one of claims 1 to 12.

14. The storage device of claim 13,
wherein the storage controller (331) is configured to
- virtualize a resource of the non-volatile memory device (332) to provide a plurality of physical functions to a host (310);
- allocate each of the plurality of physical functions (PF1, PF2, PF3) to a corresponding region of the buffer memory, based on a target quality-of-service, QoS, of the plurality of physical functions (PF1, PF2, PF3) and latencies of main memory regions of a main memory (120, 220) associated with the host (310), the main memory regions being accessed by the plurality of physical functions (PF1, PF2, PF3); and
- perform credit-based scheduling based on latencies of the main memory regions to maintain data throughput of the main memory regions when the latency of each of the main memory regions changes, and
wherein a size of the corresponding region of the buffer memory is determined based on the data throughput and the target QoS.

15. The storage device of claim 14,
wherein the storage controller (331) is configured to:
acquire information of a plurality of memory devices included in a main memory (120, 220) of the host (310); and
determine the latencies of the main memory regions of the main memory (120, 220) accessed by each of the plurality of physical functions (PF1, PF2, PF3).

## Patentansprüche

1. Verfahren zum Planen einer Eingabe-/Ausgabeanforderung für einen Hauptspeicher (120, 220), umfassend:
Erfassen (S21) von Informationen über eine Vielzahl von Speichervorrichtungen (121, 122), die in dem Hauptspeicher (120, 220) enthalten sind;
Messen (S22) einer Vielzahl von Latenzen der Vielzahl von Speichervorrichtungen (121, 122), jeweils pro Einheitsdatengröße eines Typs jeder Speichervorrichtung der Vielzahl von Speichervorrichtungen;
Gruppieren der Vielzahl von Speichervorrichtungen (121, 122) in eine Vielzahl von Speichergruppen (121, 122, 221, 222, 223, 224);
Bestimmen (S31) einer Größe eines periodisch zu wiederholenden Zeitfensters;
Einstellen (S32) einer Zielverarbeitungsgröße jeder Speichergruppe der Vielzahl von Speichergruppen basierend auf der Größe des Zeitfensters und einer Latenz jeder Speichergruppe der Vielzahl von Speichergruppen;
Zuweisen (S33) eines Kreditwerts jeder Speichergruppe für jedes Zeitfenster basierend auf der Zielverarbeitungsgröße jeder Speichergruppe der Vielzahl von Speichergruppen; und
Verarbeiten (S35) einer Vielzahl von Eingabe-/Ausgabeanforderungen, die in einer einer entsprechenden Speichergruppe der Vielzahl von Speichergruppen zugeordneten Eingabe-/Ausgabewarteschlange in eine Warteschlange eingereiht sind, unter Verwendung der jeder Speichergruppe der Vielzahl von Speichergruppen zugewiesenen Kredite.

2. Verfahren nach Anspruch 1,
wobei das Einstellen (S32) der Zielverarbeitungsgröße jeder Speichergruppe das Einstellen der Zielverarbeitungsgröße jeder Speichergruppe so umfasst, dass eine Summe von Werten, die dadurch erhalten werden, dass eine Latenz pro Einheitsdatengröße jeder Speichergruppe der Vielzahl von Speichergruppen mit deren Zielverarbeitungsgröße multipliziert wird, nicht größer ist als die Größe des Zeitfensters.

3. Verfahren nach Anspruch 2,
wobei das Einstellen (S32) der Zielverarbeitungsgröße jeder Speichergruppe umfasst, ein Verhältnis für die Zielverarbeitungsgröße jeder Speichergruppe so einzustellen, dass es gleich einem Leistungsverhältnis jeder Speichergruppe ist, und
wobei das Leistungsverhältnis jeder Speichergruppe basierend auf der Latenz jeder Speichergruppe bestimmt wird.

4. Verfahren nach Anspruch 2,
wobei das Einstellen (S32) der Zielverarbeitungsgröße jeder Speichergruppe umfasst, die Zielverarbeitungsgröße jeder Speichergruppe so einzustellen, dass sie denselben Wert aufweist.

5. Verfahren nach einem der Ansprüche 1 bis 4,
wobei der Kreditwert jeder Speichergruppe einer Zahl entspricht, die dadurch erhalten wird, dass die Zielverarbeitungsgröße jeder Speichergruppe durch die Einheitsdatengröße jeder Speichergruppe geteilt wird.

6. Verfahren nach einem der Ansprüche 1 bis 5,
wobei das Verarbeiten (S35) der Vielzahl von Eingabe-/Ausgabeanforderungen das Verarbeiten einer Eingabe-/Ausgabeanforderung für eine Speichergruppe und das Abziehen von Krediten der Speichergruppe umfasst, und
wobei eine Anzahl abgezogener Kredite basierend auf einer Datengröße der Eingabe-/Ausgabeanforderung bestimmt wird.

7. Verfahren nach einem der Ansprüche 1 bis 6,
wobei das Verarbeiten (S35) der Vielzahl von Eingabe-/Ausgabeanforderungen umfasst, wenn einer Speichergruppe zugewiesene Kredite ausgeschöpft sind, das Verarbeiten einer Eingabe-/Ausgabeanforderung für die Speichergruppe aufzuschieben, bis der Speichergruppe Kredite zugewiesen werden.

8. Verfahren nach einem der Ansprüche 1 bis 7, ferner umfassend:
Aufteilen eines pro Speichergruppe zugewiesenen Kredits auf eine Leseanforderung und eine Schreibanforderung,
wobei das Verarbeiten (S35) der Vielzahl von Eingabe-/Ausgabeanforderungen das Verarbeiten von Leseanforderungen und Schreibanforderungen unter der Vielzahl von Eingabe-/Ausgabeanforderungen unter Verwendung des aufgeteilten Kredits umfasst.

9. Verfahren nach einem der Ansprüche 1 bis 8,
wobei das Gruppieren der Vielzahl von Speichervorrichtungen (121, 122) in die Vielzahl von Speichergruppen (221, 222, 223, 224) basierend auf dem Typ jeder der Vielzahl von Speichervorrichtungen (121, 122) so durchgeführt wird, dass Speichervorrichtungen jeder Gruppe der Vielzahl von Speichergruppen (221, 222, 223, 224) denselben Typ aufweisen.

10. Verfahren nach Anspruch 9,
wobei der Typ jeder der Vielzahl von Speichervorrichtungen (121, 122) einem der folgenden entspricht: einem Dual-In-Line-Speichermodul (DIMM) und einem Compute-Express-Link-(CXL)-Speichermodul.

11. Verfahren nach Anspruch 9 oder 10,
wobei das Gruppieren der Vielzahl von Speichervorrichtungen (121, 122) in die Vielzahl von Speichergruppen (221, 222, 223, 224) ferner basierend auf einer Latenz jeder Speichervorrichtung der Vielzahl von Speichervorrichtungen (121, 122) durchgeführt wird.

12. Verfahren nach einem der Ansprüche 1 bis 11,
wobei das Messen der Vielzahl von Latenzen das Messen einer Zeitdauer umfasst, bis jede Speichervorrichtung die Eingabe-/Ausgabeanforderung abschließt.

13. Speichervorrichtung, umfassend:
eine nichtflüchtige Speichervorrichtung (332); und
einen Speichercontroller (331), der einen Pufferspeicher umfasst und dazu konfiguriert ist, das Verfahren nach einem der Ansprüche 1 bis 12 auszuführen.

14. Speichervorrichtung nach Anspruch 13,
wobei der Speichercontroller (331) dazu konfiguriert ist:
eine Ressource der nichtflüchtigen Speichervorrichtung (332) zu virtualisieren, um einem Host (310) eine Vielzahl physischer Funktionen bereitzustellen;
jede der Vielzahl physischer Funktionen (PF 1, PF2, PF3) einem entsprechenden Bereich des Pufferspeichers zuzuweisen, basierend auf einer Ziel-Quality-of-Service (QoS) der Vielzahl physischer Funktionen (PFI, PF2, PF3) und Latenzen von Hauptspeicherbereichen eines mit dem Host (310) assoziierten Hauptspeichers (120, 220), auf die durch die Vielzahl physischer Funktionen (PFI, PF2, PF3) zugegriffen wird; und
eine kreditbasierte Planung basierend auf Latenzen der Hauptspeicherbereiche durchzuführen, um einen Datendurchsatz der Hauptspeicherbereiche aufrechtzuerhalten, wenn sich die Latenz jedes Hauptspeicherbereichs ändert,
wobei eine Größe des entsprechenden Bereichs des Pufferspeichers basierend auf dem Datendurchsatz und der Ziel-Quality-of-Service bestimmt wird.

15. Speichervorrichtung nach Anspruch 14,
wobei der Speichercontroller (331) dazu konfiguriert ist:
Informationen über eine Vielzahl von in einem Hauptspeicher (120, 220) des Hosts (310) enthaltenen Speichervorrichtungen zu erfassen; und
die Latenzen der Hauptspeicherbereiche des Hauptspeichers (120, 220), auf die jeweils jede der Vielzahl physischer Funktionen (PF1, PF2, PF3) zugreift, zu bestimmen.

## Revendications

1. Procédé de planification d'une requête d'entrée/sortie pour une mémoire principale (120, 220), comprenant :
l'acquisition (S21) d'informations relatives à une pluralité de dispositifs de mémoire (121, 122) compris dans la mémoire principale (120, 220) ;
la mesure (S22) d'une pluralité de latences de la pluralité de dispositifs de mémoire (121, 122), respectivement, par taille de données unitaire d'un type de chaque dispositif de mémoire de la pluralité de dispositifs de mémoire ;
le regroupement de la pluralité de dispositifs de mémoire (121, 122) en une pluralité de groupes mémoire (121, 122, 221, 222, 223, 224) ;
la détermination (S31) d'une taille d'une fenêtre temporelle à répéter périodiquement ;
le réglage (S32) d'une taille de traitement cible de chaque groupe mémoire de la pluralité de groupes mémoire, sur la base de la taille de la fenêtre temporelle et d'une latence de chaque groupe mémoire de la pluralité de groupes mémoire ;
l'allocation (S33) d'une valeur de crédit de chaque groupe mémoire pour chaque fenêtre temporelle, sur la base de la taille de traitement cible de chaque groupe mémoire de la pluralité de groupes mémoire ; et
le traitement (S35) d'une pluralité de requêtes d'entrée/sortie mises en file d'attente dans une file d'entrée/sortie associée à un groupe mémoire correspondant de la pluralité de groupes mémoire au moyen des crédits alloués à chaque groupe mémoire de la pluralité de groupes mémoire.

2. Procédé selon la revendication 1,
dans lequel le réglage (S32) de la taille de traitement cible de chaque groupe mémoire comprend le réglage de la taille de traitement cible de chaque groupe mémoire de sorte qu'une somme de valeurs obtenues en multipliant une latence par taille de données unitaire de chaque groupe mémoire de la pluralité de groupes mémoire par la taille de traitement cible de celui-ci ne soit pas supérieure à la taille de la fenêtre temporelle.

3. Procédé selon la revendication 2,
dans lequel le réglage (S32) de la taille de traitement cible de chaque groupe mémoire comprend le réglage d'un rapport de la taille de traitement cible de chaque groupe mémoire pour qu'il soit égal à un rapport de performance de chaque groupe mémoire, et
dans lequel le rapport de performance de chaque groupe mémoire est déterminé sur la base de la latence de chaque groupe mémoire.

4. Procédé selon la revendication 2,
dans lequel le réglage (S32) de la taille de traitement cible de chaque groupe mémoire comprend le réglage de la taille de traitement cible de chaque groupe mémoire pour qu'elle ait la même valeur.

5. Procédé selon l'une quelconque des revendications 1 à 4,
dans lequel la valeur de crédit de chaque groupe mémoire correspond à un nombre obtenu en divisant la taille de traitement cible de chaque groupe mémoire par la taille de données unitaire de chaque groupe mémoire.

6. Procédé selon l'une quelconque des revendications 1 à 5,
dans lequel le traitement (S35) de la pluralité de requêtes d'entrée/sortie comprend le traitement d'une requête d'entrée/sortie pour un groupe mémoire, et la déduction de crédits du groupe mémoire, et
dans lequel une quantité de crédits déduits est déterminée sur la base d'une taille de données de la requête d'entrée/sortie.

7. Procédé selon l'une quelconque des revendications 1 à 6,
dans lequel le traitement (S35) de la pluralité de requêtes d'entrée/sortie comprend, lorsque des crédits alloués à un groupe mémoire sont épuisés, l'ajournement du traitement d'une requête d'entrée/sortie pour le groupe mémoire jusqu'à ce que des crédits soient alloués au groupe mémoire.

8. Procédé selon l'une quelconque des revendications 1 à 7, comprenant en outre :
la répartition d'un crédit alloué par groupe mémoire à une requête de lecture et à une requête d'écriture,
dans lequel le traitement (S35) de la pluralité de requêtes d'entrée/sortie comprend le traitement de requêtes de lecture et de requêtes d'écriture parmi la pluralité de requêtes d'entrée/sortie au moyen du crédit réparti.

9. Procédé selon l'une quelconque des revendications 1 à 8,
dans lequel le regroupement de la pluralité de dispositifs de mémoire (121, 122) en la pluralité de groupes mémoire (221, 222, 223, 224) est effectué sur la base du type de chacun de la pluralité de dispositifs de mémoire (121, 122) de telle sorte que les dispositifs de mémoire de chaque groupe de la pluralité de groupes mémoire (221, 222, 223, 224) aient le même type.

10. Procédé selon la revendication 9,
dans lequel le type de chacun de la pluralité de dispositifs de mémoire (121, 122) correspond à l'un des éléments suivants : un module de mémoire double en ligne (DIMM) et un module de mémoire Compute Express Link (CXL).

11. Procédé selon la revendication 9 ou 10,
dans lequel le regroupement de la pluralité de dispositifs de mémoire (121, 122) en la pluralité de groupes mémoire (221, 222, 223, 224) est effectué en outre sur la base d'une latence de chaque dispositif de mémoire de la pluralité de dispositifs de mémoire (121, 122).

12. Procédé selon l'une quelconque des revendications 1 à 11,
dans lequel la mesure de la pluralité de latences comprend la mesure d'une durée jusqu'à ce que chaque dispositif de mémoire achève la requête d'entrée/sortie.

13. Dispositif de stockage comprenant :
un dispositif de mémoire non volatile (332) ; et
un contrôleur de stockage (331) comprenant une mémoire tampon et configuré pour exécuter le procédé selon l'une quelconque des revendications 1 à 12.

14. Dispositif de stockage selon la revendication 13,
dans lequel le contrôleur de stockage (331) est configuré pour :
virtualiser une ressource du dispositif de mémoire non volatile (332) afin de fournir une pluralité de fonctions physiques à un hôte (310) ;
allouer chacune de la pluralité de fonctions physiques (PF 1, PF2, PF3) à une région correspondante de la mémoire tampon, sur la base d'une qualité de service cible (QoS) de la pluralité de fonctions physiques (PFI, PF2, PF3) et de latences de régions de mémoire principale d'une mémoire principale (120, 220) associée à l'hôte (310), auxquelles la pluralité de fonctions physiques (PFI, PF2, PF3) accède ; et
effectuer une planification à base de crédits sur la base de latences des régions de mémoire principale afin de maintenir un débit de données des régions de mémoire principale lorsque la latence de chacune des régions de mémoire principale change,
et dans lequel une taille de la région correspondante de la mémoire tampon est déterminée sur la base du débit de données et de la qualité de service cible.

15. Dispositif de stockage selon la revendication 14,
dans lequel le contrôleur de stockage (331) est configuré pour :
acquérir des informations relatives à une pluralité de dispositifs de mémoire compris dans une mémoire principale (120, 220) de l'hôte (310) ; et
déterminer les latences des régions de mémoire principale de la mémoire principale (120, 220) auxquelles chacune de la pluralité de fonctions physiques (PF1, PF2, PF3) accède.
